(19) Europäisches Patentamt
European Patent Office
Office européen des brevets

(11) **EP 3 633 549 B1**

(12) **EUROPEAN PATENT SPECIFICATION**

(45) Date of publication and mention of the grant of the patent:
**30.10.2024 Bulletin 2024/44**

(21) Application number: **18810647.0**

(22) Date of filing: **16.03.2018**

(51) International Patent Classification (IPC):
*G06V 10/774* (2022.01)     *G06V 10/776* (2022.01)
*G06V 10/82* (2022.01)     *G06V 40/16* (2022.01)

(52) Cooperative Patent Classification (CPC):
**G06V 10/764; G06N 3/02; G06V 10/774;
G06V 10/776; G06V 10/82; G06V 40/161**

(86) International application number:
**PCT/CN2018/079281**

(87) International publication number:
**WO 2018/219016 (06.12.2018 Gazette 2018/49)**

(54) **METHOD AND APPARATUS FOR TRAINING A FACIAL DETECTION MODEL**

VERFAHREN UND VORICHTUNG ZUM TRAINIEREN EINES GESICHTSERKENNUNGSMODELS

PROCÉDÉ ET APPAREIL D'APPRENTISSAGE D'UN MODÈLE DE DÉTECTION FACIALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.06.2017 CN 201710406726**

(43) Date of publication of application:
**08.04.2020 Bulletin 2020/15**

(73) Proprietor: **Tencent Technology (Shenzhen)
Company Limited
Shenzhen, Guangdong, 518057 (CN)**

(72) Inventors:
• **WANG, Hao
Shenzhen, Guangdong 518057 (CN)**
• **LI, Zhifeng
Shenzhen, Guangdong 518057 (CN)**
• **JI, Xing
Shenzhen, Guangdong 518057 (CN)**
• **JIA, Fan
Shenzhen, Guangdong 518057 (CN)**
• **WANG, Yitong
Shenzhen, Guangdong 518057 (CN)**

(74) Representative: **Witte, Weller & Partner
Patentanwälte mbB
Postfach 10 54 62
70047 Stuttgart (DE)**

(56) References cited:
**CN-A- 101 231 702     CN-A- 102 663 370
CN-A- 104 063 865     CN-A- 104 680 121
CN-A- 106 682 734     US-A1- 2017 046 563**

• **JIMIN XIAO ET AL: "IAN: The Individual
Aggregation Network for Person Search",
ARXIV.ORG, CORNELL UNIVERSITY LIBRARY,
201 OLIN LIBRARY CORNELL UNIVERSITY
ITHACA, NY 14853, 16 May 2017 (2017-05-16),
XP080948142**
• **WEN YANDONG ET AL: "A Discriminative
Feature Learning Approach for Deep Face
Recognition", 16 September 2016, 12TH
EUROPEAN CONFERENCE ON COMPUTER
VISION, ECCV 2012; [LECTURE NOTES IN
COMPUTER SCIENCE], SPRINGER BERLIN
HEIDELBERG, BERLIN GERMANY, PAGE(S) 499 -
515, ISBN: 978-3-642-38170-6, ISSN: 0302-9743,
XP047565790**

• XIAO ZHANG ET AL: "Range Loss for Deep Face Recognition with Long-tail", ARXIV.ORG, CORNELL UNIVERSITY LIBRARY, 201 OLIN LIBRARY CORNELL UNIVERSITY ITHACA, NY 14853, 28 November 2016 (2016-11-28), XP080734929

**Description**

FIELD OF THE TECHNOLOGY

The present disclosure relates to the field of image processing technologies, and specifically, to a face detection training method and apparatus, and an electronic device.

BACKGROUND OF THE DISCLOSURE

Face detection is a technology in which a face detector is used to detect a face from an image. Quality of face detection training directly affects face detection performance. Therefore, how to optimize a face detection training process has become a researching focus for persons skilled in the art.

With the development of deep learning, convolutional neural network (CNN)-based face detection training has become a mainstream face detection training method. For example, face detection training is performed by using a Faster Region-based convolutional neural network (Faster RCNN). A CNN-based face detection training process mainly includes: constructing a face detection model, performing iterative training with training samples, to update network parameters of the face detection model in each iteration, thereby optimizing the face detection training. The process of updating network parameters of the face detection model in each iteration may be considered as a face detection optimization process.

The goal of the conventional face detection optimization target is to maximize a difference between a face and a non-face (that is, maximizing an inter-class difference). Less attention is paid to a difference between faces in the conventional face detection, resulting in a poor identification capability and poor face detection robustness while dealing with a face change in different scenarios.

"IAN: The Individual Aggregation Network for Person Search", JIMIN XIAO ET AL., discloses a new challenging computer version task with many meaningful applications of person search in real-world scenarios. The challenge of this task mainly comes from: (1) unavailable bounding boxes for pedestrians and the model needs to search for the person over the whole gallery images; (2) huge variance of visual appearance of a particular person owing to varying poses, lighting conditions, and occlusions. To address these two critical issues in modern person search applications, it is proposed a novel Individual Aggregation Network (IAN) that can accurately localize persons by learning to minimize intra-person feature variations. IAN is built upon the state-of-the art object detection framework, i.e., faster R-CNN, so that high-quality region proposals for pedestrians can be produced in an online manner. In addition, to relieve the negative effect caused by varying visual appearances of the same individual, IAN introduces a novel center loss that can increase the intra-class compactness of feature representations. The engaged center loss encourages persons with the same identity to have similar feature characteristics. Extensive experimental results on two benchmarks, i.e., CUHK-SYSU and PRW, well demonstrate the superiority of the proposed model. In particular, IAN achieves 77.23% mAP and 80.45% top-1 accuracy on CUHK-SYSU, which outperform the state-of-the-art by 1.7% and 1.85%, respectively.

"A Discriminative Feature Learning Approach for Deep Face Recognition", WEN YANDONG ET AL., discloses that Convolutional neural networks (CNNs) have been widely used in computer vision community, significantly improving the state-of-the-art. In most of the available CNNs, the softmax loss function is used as the supervision signal to train the deep model. In order to enhance the discriminative power of the deeply learned features, it is proposed a new supervision signal, called center loss, for face recognition task. Specifically, the center loss simultaneously learns a center for deep features of each class and penalizes the distances between the deep features and their corresponding class centers. More importantly, it is proved that the proposed center loss function is trainable and easy to optimize in the CNNs. With the joint supervision of softmax loss and center loss, we can train a robust CNNs to obtain the deep features with the two key learning objectives, inter-class dispension and intra-class compactness as much as possible, which are very essential to face recognition. It is encouraging to see that our CNNs (with such joint supervision) achieve the state-of-the-art accuracy on several important face recognition benchmarks, Labeled Faces in the Wild (LFW), YouTube Faces (YTF), and MegaFace Challenge. Especially, it achieves the best results on MegaFace (the largest public domain face benchmark) under the protocol of small training set (contains under 500000 images and under 20000 persons), significantly improving the previous results and setting new state-of-the-art for both face recognition and face verification tasks.

"Range Loss for Deep Face Recognition with Long-tail" XIAO ZHANG ET AL., discloses that Convolutional neural networks have achieved great improvement on face recognition in recent years because of its extraordinary ability in learning discriminative features of people with different identities. To train such a well-designed deep network, tremendous amounts of data is indispensable. Long tail distribution specifically refers to the fact that a small number of generic entities appear frequently while other objects far less existing. Considering the existence of long tail distribution of the real world data, large but uniform distributed data are usually hard to retrieve. Empirical experiences and analysis show that classes with more samples will pose greater impact on the feature learning process and inversely cripple the whole models feature extracting ability on tail part data. Contrary to most of the existing works that alleviate this problem by simply cutting the tailed data for uniform distributions across the classes, it is proposed a new loss function called range loss to effectively utilize the whole long tailed data in training process. More specifically, range loss is designed to reduce overall intrapersonal variations while enlarging inter-personal differences within one mini-batch simultaneously when facing even extremely unbalanced data. The optimization objective of range loss is the k greatest range's harmonic mean values in one class and the shortest inter-class distance within one batch. Extensive experiments on two famous and challenging face recognition benchmarks not only demonstrate the effectiveness of the proposed approach in overcoming the long tail effect but also show the good generalization ability of the proposed approach.

SUMMARY

In view of this, embodiments of the present disclosure provide a face detection training method and apparatus to improve a capability of identifying a face by the face detection and enhance face detection robustness.

In order to achieve the foregoing objective, the embodiments of the present disclosure provide the following technical solutions.

The claimed subject matter is defined in the appended independent claims. Further refinements are provided in the dependent claims.

The embodiments of the present disclosure further provide an electronic device, including a memory and a processor,

the memory storing a program, when being executed by the processor, causes the processor to perform the above face detection training method.

The embodiments of the present disclosure further provide a computer-readable storage medium including instructions, when being executed on a computer, cause the computer to perform the above face detection training method.

In the embodiments of the present disclosure, a face detection training optimization target is combined with the center loss value corresponding to the batch data training sample, so that the face detection is invariant for the intra-class difference between faces. Therefore, by performing an optimized face detection training in combination with the center loss value corresponding to the batch data training sample, the optimized face detection after the training is invariant to intra-class difference between faces, and face detection robustness is enhanced while ensuring a high inter-class detection performance for detecting a face and non-face.

BRIEF DESCRIPTION OF THE DRAWINGS

To describe the technical solutions in the embodiments of the present disclosure or in the related technology more clearly, the following briefly describes the accompanying drawings for describing the embodiments or the related technology. Apparently, the accompanying drawings in the following description show merely embodiments of the present disclosure, and a person of ordinary skill in the art may still derive other drawings from these accompanying drawings without creative efforts.

FIG. 1 shows a structure of a face detection model.
FIG. 2 shows another structure of a face detection model.
FIG. 3 is a block diagram of a hardware structure of an electronic device.
FIG. 4 is a flowchart of a face detection training method according to an embodiment of the present disclosure.
FIG. 5 is a schematic diagram of face detection training based on a face detection model.
FIG. 6 is a flowchart of a method for determining a face box coordinates regression loss value.
FIG. 7 is a flowchart of a method for obtaining a batch data training sample.
FIG. 8 is a structural block diagram of a face detection training apparatus according to an embodiment of the present disclosure.
FIG. 9 is another structural block diagram of a face detection training apparatus according to an embodiment of the present disclosure.
FIG. 10 is still another structural block diagram of a face detection training apparatus according to an embodiment of the present disclosure.

DESCRIPTION OF EMBODIMENTS

Hereinafter, the technical solutions in the embodiments of the present disclosure are described with reference to the accompanying drawings in the embodiments of the present disclosure. Obviously, the described embodiments are only some embodiments, rather than all embodiments, of the present disclosure. All other embodiments obtained by a person of ordinary skill in the art based on the embodiments of the present disclosure without creative works shall fall within the protection scope of the present disclosure.

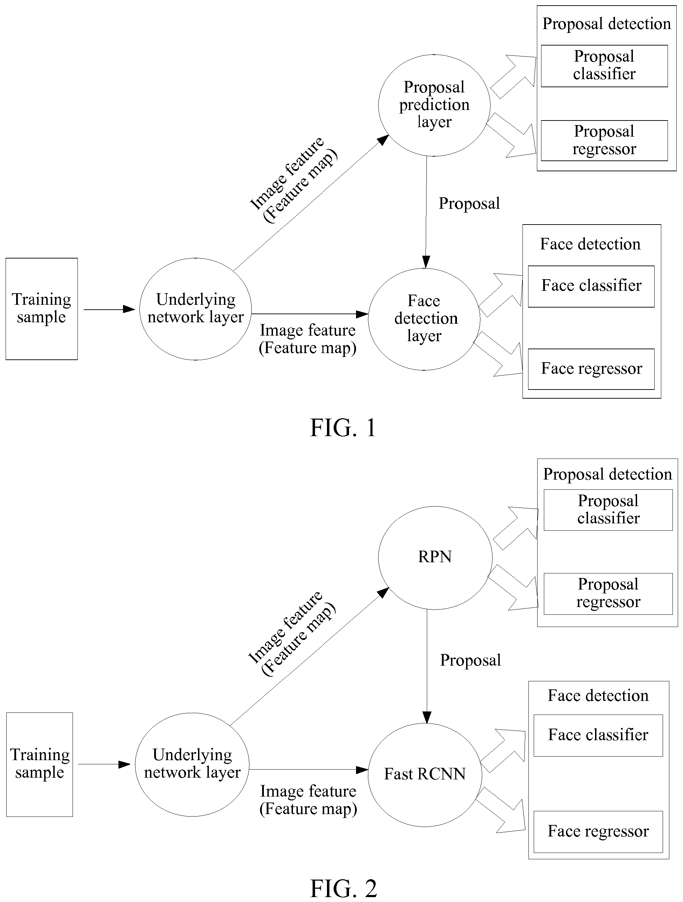

A face detection model constructed based on a convolutional neural network (CNN) in the embodiments of the present disclosure may be shown in FIG. 1, which includes an underlying network layer, a proposal prediction layer, and a face detection layer.

The underlying network layer may be a subnet formed by sequentially connecting a series of convolution layers and pooling layers. The underlying network layer may perform a layer-by-layer convolution processing on a training sample (where the training sample may be a sample in a form of an image) by using the series of convolution layers. A current convolution layer performs a convolution processing on a convolution processing result outputted by a previous convolution layer. Herein, in features of the image processed by the series of convolution layers, a shallow layer feature can represent various features such as edge points, textures and structures, and a deep layer feature can represent a further abstract mapping based on the shallow layer feature. By the layer-by-layer convolution processing using a plurality of convolution layers, image features of different layers can be extracted. For each training sample, the underlying network layer outputs a feature map by the convolution processing of the last layer, and the feature map can represent the image features.

The proposal prediction layer may be a subnet having a fully convolutional structure, and is established based on the image feature output by the underlying network layer. The proposal prediction layer may map features from each training sample by using convolution layers, thereby establishing a proposal classifier and a proposal regressor by using mapping nodes, such that a detection for candidate region proposals (hereinafter abbreviated to proposals) is realized. The proposal classifier may be configured to predict probabilities of the proposals, and the proposal regressor may be configured to predict coordinates of the proposals. In such manner, the proposals are outputted. The proposals output by the proposal prediction layer may be inputted to the face detection layer.

The face detection layer may be a subnet including a region-of-interest pooling layer (RoI Pooling), and is established based on the image features outputted by the underlying network layer and the proposals outputted by the proposal prediction layer. For each training sample, the face detection layer may perform, based on the proposal, a dimension-reducing sampling on the image features of the training sample which are outputted by the underlying network layer, to obtain a feature map having a fixed size. All nodes in the feature map are connected and mapped to an eigenvector having a fixed length, so as to obtain the eigenvector of each training sample. A face classifier and a face regressor are built based on each training sample. The face classifier and the face regressor jointly implement face detection. The face classifier can predict a probability of a face and a non-face, and the face regressor may perform more accurate coordinates regression for a box containing a human face based on the proposal.

Further, the face detection model described in FIG. 1 may be implemented using a Faster RCNN-based face detection model. The Faster RCNN is a typical algorithm for face detection, and can be divided into a Region Proposal Network (RPN) layer and a Fast RCNN layer. The RPN layer generates candidate bounding boxes, and the Fast RCNN layer may obtain a final detection result based on the candidate bounding boxes.

As shown in FIG. 2, the face detection model based on the Faster RCNN may include an underlying network layer, an RPN layer, and a Fast RCNN layer. The RPN layer may be considered as an optional implementation of the proposal prediction layer, and the Fast RCNN layer may be considered as an optional implementation of the face detection layer.

In an embodiment of the present disclosure, an objective of the RPN layer is to generate proposals based on image features output by the underlying network layer. In this process, a plurality of anchor boxes may be predefined, and the plurality of anchor boxes may have different sizes and aspect ratios. Sub-boxes in a training sample may be determined by using the plurality of predefined anchor boxes, and the proposal is predicted by using the sub-boxes (for example, proposal detection may be trained by using the sub-boxes, and subsequently be used to predict the proposal).

Optionally, the anchor box may be used for defining and establishing a classifier and a regressor in the RPN layer for generating the proposal. The proposal detection may be known from an RPN. Specifically, each anchor box is associated with a detection (classification and regression), and a predicted value and a target value are required by the training and learning of the classification and the regression. In the RPN, a target classification value is determined (that is, whether the output is defined as a positive class or a negative class) according to an overlapping rate of the anchor box and a true box. Similarly, in the Fast RCNN, a target classification value is determined according to an overlapping rate of the proposal and the true box. Therefore, the anchor box used in the RPN and the proposal used in the Fast RCNN have similar functions when establishing the classifier, and the anchor box may be considered as a candidate box of the proposal. In the RPN, a plurality of proposal detections (each proposal detection is associated with one anchor box) may be established for each node obtained after the convolution processing is performed on image features.

An objective of the Fast RCNN layer is to generate an eigenvector of a training sample based on the proposals and the image features outputted by the underlying network layer, so that a face classifier and a face regressor are built by using eigenvectors of the training samples. The face detection is implemented using both the face classifier and the face regressor.

To improve the detection performance of the face detection, an iterative training may be performed by using a model optimization algorithm such as a stochastic gradient descent (SGD) algorithm. In each iteration, batch data training samples are selected from a training sample set to perform training, and then in each iteration, network parameters of a face detection model are updated depending on whether a face detection optimization target is realized.

Currently, maximizing a difference between a face and a non-face is a main optimized objective of the face detection, but face variations for faces in different scenarios are ignored. For example, face variations in different scenarios, such as different photographing angles, resolutions, lighting conditions, expression changes, and blocking, are ignored, leading to a poor identification capability and poor face detection robustness. For example, if a difference between intra-class faces (for example, with lighting and without lighting) is excessively large, the faces may be identified into two different classes, rather than a same class in fact. Therefore, in embodiments of the present disclosure, an intra-class difference should be minimized, thereby the face detection is ensured to be invariant to the intra-class differences.

Accordingly, the embodiments of the present disclosure improve a process of optimizing the iterative training of face detection, and provide a new face detection training method, which can reduce an intra-class difference between faces and improve a face identification capability in the face detection while ensuring a high performance of identifying a face and a non-face.

The face detection training method provided in the embodiments of the present disclosure may be loaded, in a form of a program, onto an electronic device configured to implement the face detection training. The electronic device may be a terminal device such as a network-side server or a user-side personal computer (PC). A form of the electronic device may be determined based on an actual requirement of the face detection training.

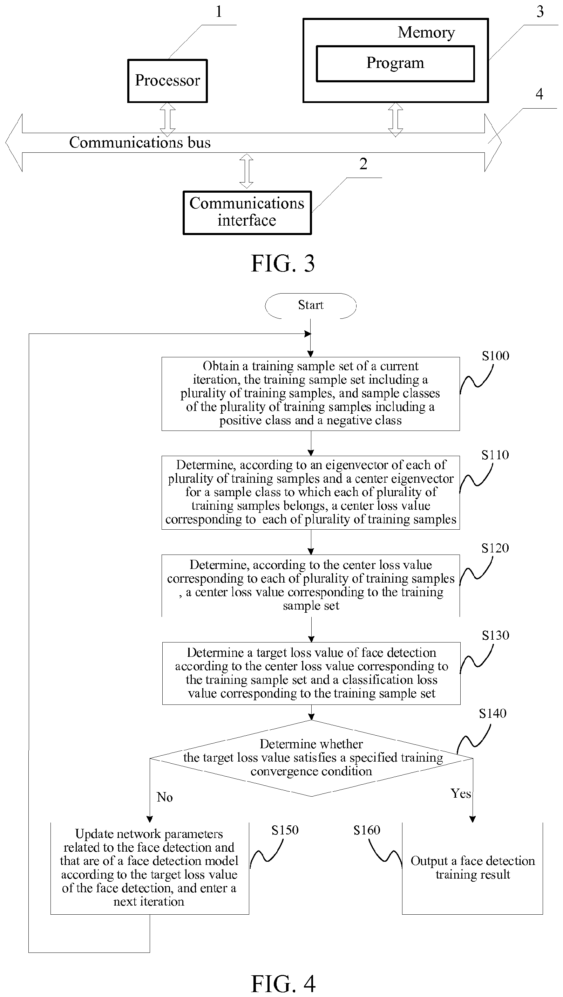

Optionally, a hardware structure of the electronic device configured to implement the face detection training may be shown in FIG. 3, and includes at least one processor 1, at least one communications interface 2, at least one memory 3, and at least one communications bus 4.

In an embodiment of the present disclosure, there are at least one processor 1, communications interface 2, memory 3, and communications bus 4. The processor 1, the communications interface 2, and the memory 3 may communicate with each other via the communications bus 4. Apparently, Fig.3 merely shows one of schematic communication connection between the processor 1, the communications interface 2, the memory 3, and the communications bus 4.

Optionally, the communications interface 2 may be an interface of a communications module, for example, an interface of a GSM module.

The processor 1 may be a central processing unit (CPU) or an application-specific integrated circuit (ASIC), or may be configured as one or more integrated circuits for implementing embodiments of the present disclosure.

The memory 3 may include a high-speed RAM memory, and/or a non-volatile memory (NVM), for example, at least one magnetic disk memory.

The memory 3 stores a program. The processor 1 can invoke the program stored in the memory 3, so as to implement the face detection training method provided in the embodiments of the present disclosure.

In an embodiment of the present disclosure, an iterative training of a face detection may be performed by using a model optimization algorithm such as a stochastic gradient descent (SGD) algorithm. The SGD is a conventional convolutional neural network optimization algorithm, and is effective for resolving a large-scale machine learning problem. In each iteration using the SGD, a gradient descent optimization is performed by using a batch data training sample (Minibatch) extracted randomly from a training sample set.

Taken face detection training in one iteration as an example, a procedure of the face detection training method provided in the embodiment of the present disclosure may be shown FIG. 4. The face detection training procedure in each of multiple iterations may refer to FIG. 4. As shown in FIG. 4, the face detection training method provided in the embodiment of the present disclosure may include the following steps S100 to S 160.

In step S100, a batch data training sample of a current iteration is obtained, where the batch data training sample includes a plurality of training samples of different sample classes.

Optionally, the batch data training sample (Minibatch) is selected from a training sample set including all training samples.

The face detection may be considered as a two-class task (a face and a non-face). In each iteration, a plurality of face images may be obtained from the training sample set and used as training samples of a positive class, and a plurality of non-face images may be obtained and used as training samples of a negative class. The obtained training samples of the positive class and the obtained training samples of the negative class constitute the batch data training sample in each iteration.

Correspondingly, the batch data training sample used in the current iteration includes the plurality of training samples which can be classified into a positive class (that is, the training samples of the positive class, corresponding to the face images) and a negative class (that is, the training samples of negative class, corresponding to the non-face images).

In Step S110, a center loss value corresponding to each training sample of the plurality of training samples is determined, according to an eigenvector of each training sample of the plurality of training samples and a center eigenvector for a sample class to which each training sample of the plurality of training samples belongs.

In an embodiment of the present disclosure, for a training sample belonging to the batch data training sample, an eigenvector of the training sample and a center eigenvector that corresponds to a sample class to which the training sample belongs in the batch data training sample is determined, thereby determining a center loss value corresponding to the training sample. Such processing may be performed on each training sample in the batch data training sample, to obtain the center loss value corresponding to each training sample in the batch data training sample.

Optionally, a center eigenvector for a sample class in the batch data training sample may be correspondingly updated by using an average value of eigenvectors of training samples belonging to the sample class in the batch data training sample in the current iteration.

Optionally, in an embodiment of the present disclosure, for the sample class, the training samples belonging to the sample class in the batch data training sample may be determined. The average value of the eigenvectors of the training samples belonging to the sample class is determined according to the eigenvectors of the training samples belonging to the sample class in the batch data training sample, to obtain an update variable of the center eigenvector for the sample class in the batch data training sample. The center eigenvector for the sample class in the batch data training sample is obtained according to the update variable and a predetermined learning rate. In this way, the center eigenvector for the sample class is updated according to the average value of the eigenvectors of the training samples belonging to the sample class in the batch data training sample.

Optionally, in the embodiment of the present disclosure, the center eigenvector for the sample class in the batch data training sample may be determined according to the following formula:

$$C_j^{t+1} = C_j^t - \alpha \Delta C_j^t$$

where a represents a predetermined learning rate, $\Delta C_j^t$ represents an update variable, $C_j^t$ represents a center eigenvector corresponding to the j$^{th}$ sample class in a batch data training sample for the t$^{th}$ iteration, and $C_j^{t+1}$ representing a center eigenvector corresponding to the j$^{th}$ sample class in a batch data training sample the (t+1)$^{th}$ iteration.

Optionally, in an embodiment of the present disclosure, the center eigenvector corresponding to the sample class in the batch data training sample of the current iteration may be obtained by subtracting a product of the update variable and the specified learning rate from a center eigenvector corresponding to the sample class in a batch data training sample of a previous iteration.

Optionally, in an embodiment of the present disclosure, for a positive sample class in the batch data training sample, eigenvectors of training samples belonging to the positive class in the batch data training sample may be determined, and an average value of the eigenvectors of the training samples belonging to the positive class may be determined, so as to update a center eigenvector of the positive sample class. Correspondingly, in an embodiment of the present disclosure, for a negative sample class in the batch data training sample, eigenvectors of training samples belonging to the negative class in the batch data training sample may be determined, and an average value of the eigenvectors of the training samples belonging to the negative class may be determined, so as to update a center eigenvector of the negative sample class.

Optionally, further, in an embodiment of the present disclosure, for each training sample of the positive class in the batch data training sample, a center loss value corresponding to each training sample of the positive class may be determined according to an eigenvector of each training sample of the positive class and the center eigenvector of the positive sample class. In an embodiment of the present disclosure, for each training sample of the negative class in the batch data training sample, a center loss value corresponding to each training sample of the negative class may be determined according to an eigenvector of each training sample of the negative class and the center eigenvector of the negative sample class.

Optionally, a center loss value of a training sample may be represented by a distance between an eigenvector of the training sample and a center eigenvector for a sample class to which the training sample belongs. Assuming that $x_i$ represents an i$^{th}$ training sample in the batch data training sample, $y_i$ represents a sample class to which $x_i$ belongs ( in an example, $y_i=1$ represents a positive class and $y_i=0$ represents a negative class, or in another example $y_i=0$ represents a negative class and $y_i=1$ represents a positive class. values of $y_i$ corresponding to the positive and negative classes should be set to be different), $c_{yi}$ represents a center eigenvector for the sample class $y_i$ to which $x_i$ belongs, and a center loss value of the sample $x_i$ may be defined as $\| x_i - c_{y_i} \|_2^2$ .

It should be noted that a process of determining an eigenvector of a training sample may be as follows. After an underlying network layer outputs image features of the training sample, a face detection layer determines, according to proposals, a region of interest in the training sample, so that the face detection layer performs a dimension-reducing sampling on the image feature in the region of interest of the training sample, to obtain a feature map having a fixed size. All nodes on the feature map are connected and mapped to an eigenvector having a fixed length, to obtain the eigenvector of the training sample.

In step S120, a center loss value corresponding to the batch data training sample is determined according to the center loss value corresponding to each of the plurality of training samples.

Optionally, in an embodiment of the present disclosure, an average value of center loss values corresponding to the training samples may be determined according to the center loss values corresponding to the training samples, and the center loss value corresponding to the batch data training sample may be determined according to the average value of the center loss values corresponding to the training samples.

Optionally, in an embodiment of the present disclosure, the average value of the center loss values corresponding to the training samples may be directly used as the center loss value corresponding to the batch data training sample. Alternatively, the average value of the center loss values corresponding to the training samples may be multiplied by a predetermined value (for example, by 1/2) to obtain the center loss value corresponding to the batch data training sample.

Assuming that the batch data training sample has m training samples in total, the center loss value corresponding to the batch data training sample may be represented as

$$\frac{1}{2}\sum_{i=1}^{m}\left\|x_i - c_{yi}\right\|_2^2 .$$

In step S130, a target loss value of face detection is determined according to at least the center loss value corresponding to the batch data training sample.

The target loss value of the face detection represents an optimization target of an iterative training process of the face detection. In a case that the target loss value satisfies a specified training convergence condition (for example, a minimum value), the iterative training may be terminated and the face detection may be outputted. In each iteration, in the embodiments of the present disclosure, the conventional face detection optimization target can be combined with the center loss value corresponding to the used batch data training sample, to serve as a face detection optimization target in the embodiments of the present disclosure, thereby obtaining the target loss value of the face detection.

Optionally, in an embodiment of the present disclosure, the target loss value of the face detection may be determined according to the center loss value corresponding to the batch data training sample, a classification loss value corresponding to the batch data training sample and a face box coordinates regression loss value corresponding to the batch data training sample.

The classification loss value corresponding to the batch data training sample may be determined according to a difference between a prediction probability for classification and a target probability for classification (a true probability for classification) of each training sample in the batch data training sample.

In an embodiment of the present disclosure, for each training sample in the batch data training sample, after an eigenvector of the training sample is obtained, a sample class to which the training sample belongs may be predicted by using a Softmax function or the like, and the prediction probability for classification of the training sample is obtained. In this way, the classification loss value corresponding to the training sample may be determined according to the prediction probability for classification of the training sample and the true target probability for classification of the training sample (for example, calculating a difference between the prediction probability for classification and a target probability for classification of the training sample). Subsequently, the classification loss value corresponding to the batch data training sample may be determined according to the classification loss value corresponding to each of the training samples in the batch data training sample (for example, calculating an average value of classification loss values of the training samples or the like).

In view of this, the classification loss value corresponding to the batch data training sample is an indicator for interclass classification of a face and a non-face in the face detection, and the classification loss value corresponding to the batch data training sample may represent a difference between a face and a non-face (an inter-class difference). The classification loss value corresponding to the batch data training sample is a part of the face detection optimization target, so that optimized face detection has a high performance in the inter-class classification for a face and a non-face.

Based on this, the center loss value corresponding to the batch data training sample represents a distance between the eigenvector of the training sample and the center eigenvector for the sample class to which the training sample belongs. Therefore, the center loss value corresponding to the batch data training sample can illustrate a difference between the eigenvector of the training sample and the center eigenvector for the sample class to which the training sample belongs, and can represent a difference between intra-class eigenvectors of training samples of each sample class. In this way, the center loss value corresponding to the batch data training sample is a part of the face detection optimization target, so that the optimized face detection is invariant to the intra-class differences between faces (for example, an intra-class difference between faces in different scenarios) and face detection robustness can be enhanced.

Optionally, the face detection training may be a joint training process including a classification training and a regression training. In each iteration, loss values including a center loss value and a classification loss value corresponding

8

to a batch data training sample may be considered as a optimization target of the classification training. For example, minimizing the loss values including the center loss value and the classification loss value corresponding to the batch data training sample is used as the optimization target the classification training in the face detection training.

In each iteration, a optimization target of the regression training in the face detection training may include a face box coordinates regression loss value corresponding to the batch data training sample.

The target loss value of the face detection, which represents the face detection training optimization target, may be formed by combining the center loss value, the classification loss value, and the face box coordinates regression loss value corresponding to the batch data training sample in an iteration.

Optionally, in an embodiment of the present disclosure, a product of the center loss value corresponding to the batch data training sample and a first specified weight, a product of the face box coordinates regression loss value corresponding to the batch data training sample and a second specified weight, and the classification loss value corresponding to the batch data training sample are summed to obtain the target loss value of the face detection.

Assuming that $L_{cls}$ represents the classification loss value corresponding to the batch data training sample, $L_c$ represents the center loss value corresponding to the batch data training sample, the target loss value of the face detection may be represented as $L_{cls}+\mu L_c+\lambda L_{reg}$, $\mu$ and $\lambda$ representing specified weight coefficients, $\mu$ being the first specified weight, and $\lambda$ being the second specified weight.

Optionally, in an embodiment of the present disclosure, as an alternative, the center loss value, the classification loss value, and the face box coordinates regression loss value corresponding to the batch data training sample may be directly summed to obtain the target loss value of the face detection.

In step S 140, whether the target loss value of the face detection satisfies a specified training convergence condition is determined; if the determination result is negative, perform step S150; and otherwise, perform step S160.

Optionally, the specified training convergence condition may be considered as that the target loss value of the face detection is minimized.

Specifically, the smaller the classification loss value corresponding to the batch data training sample is, the better performance for classifying a face and a non-face in the face detection is, such that the face detection can distinguish a difference between a face and a non-face to a greatest extent (that is, a maximum inter-class difference). The smaller center loss value corresponding to the batch data training sample is, the smaller intra-class eigenvector difference between training samples in each sample class is, so that a difference between training samples in the same sample class is reduced, thereby reducing a difference between faces in the sample class. In other words, through iterative training, a distance between an eigenvector of each training sample in the batch data training sample and a center eigenvector for a sample class to which the training sample belongs is minimized.

The target loss value of the face detection is determined by using the center loss value corresponding to the batch data training sample, and then whether the training convergence condition is satisfied is determined by using the target loss value of the face detection. In this way, the face detection can be invariant to an intra-class difference between faces (for example, an intra-class difference between faces in different scenarios) such that the face detection robustness is enhanced while minimizing the center loss value corresponding to the batch data training sample in the face detection.

In step S150, network parameters of a face detection model relating to the face detection are updated according to the target loss value of the face detection, and then return to step S100 to enter a next iteration.

Optionally, in an embodiment of the present disclosure, if the target loss value of the face detection does not satisfy the specified training convergence condition (for example, if the target loss value of the face detection does not satisfy a minimum value), , the network parameters of the face detection model may be updated according to the target loss value of the face detection. In addition, the next iteration is performed and step S100 is returned to start an iterative training procedure, so as to cyclically perform step S100 to step S140 by using the face detection model with the updated network parameters until a determining result in step S140 is that the target loss value of the face detection satisfies the specified training convergence condition.

Optionally, in an embodiment of the present disclosure, the next iteration may be entered and step S100 may be returned by using a stochastic gradient descent method.

In step S160, the face detection is outputted.

Optionally, if the target loss value of the face detection satisfies the specified training convergence condition (for example, if the target loss value of the face detection satisfies a minimum value), the face detection obtained through training by using the face detection model may be outputted, to complete the process of optimizing the iterative training of the face detection.

The face detection training procedure provided in the embodiment of the present disclosure may include: obtaining a batch data training sample in a current iteration, the batch data training sample including a plurality of training samples of different sample classes; determining, according to an eigenvector of each training sample and a center eigenvector for a sample class to which each training sample belongs, a center loss value corresponding to each training sample; determining, according to the center loss value corresponding to each training sample, a center loss value corresponding to the batch data training sample; determining a target loss value of face detection according to at least the center loss value corresponding to the batch data training sample; if the target loss value of the face detection does not satisfy a specified training convergence condition, updating network parameters of a face detection model according to the target loss value of the face detection, and entering a next iteration until the target loss value of the face detection satisfies the specified training convergence condition; and outputting the face detection if the target loss value of the face detection satisfies the specified training convergence condition, to complete face detection training.

In the embodiment of the present disclosure, the face detection training optimization target is combined with the center loss value corresponding to the batch data training sample, so that the face detection is invariant to the intra-class difference between faces. Therefore, according to optimized face detection training performed in combination with the center loss value corresponding to the batch data training sample, the optimized face detection after training is invariant to the intra-class difference between faces and face detection robustness is enhanced while ensuring higher inter-class detection performance for a face and non-face.

Optionally, in an embodiment of the present disclosure, when the network parameters of the face detection model are updated according to the target loss value of the face detection, the network parameters of the face detection model may be updated by a back propagation based on the target loss value of the face detection.

Optionally, in an embodiment of the present disclosure, a parameter update value of the face detection may be determined according to the target loss value of the face detection and the network parameters of the face detection model in a previous iteration, so as to update the network parameter of the face detection model in the previous iteration according to the parameter update value of the face detection.

Optionally, assuming that the target loss value of the face detection is Loss, $Loss = L_{ls} + \mu L_c + \lambda L_{reg}$, and the network parameter of the face detection model in the previous iteration is W1, the parameter update value of the face detection may be represented as:

$$\Delta W = \frac{\partial Loss}{\partial W1}.$$

The updating the network parameters of the face detection model in the previous iteration according to the parameter update value of the face detection may be implemented by using the following formula:

$$W2 = kW1 - \alpha \left( \Delta W + sW1 \right)$$

Where W2 denotes an updated network parameter of the face detection model, k denotes momentum, $\alpha$ denotes a learning rate, and s denotes a weight decay coefficient.

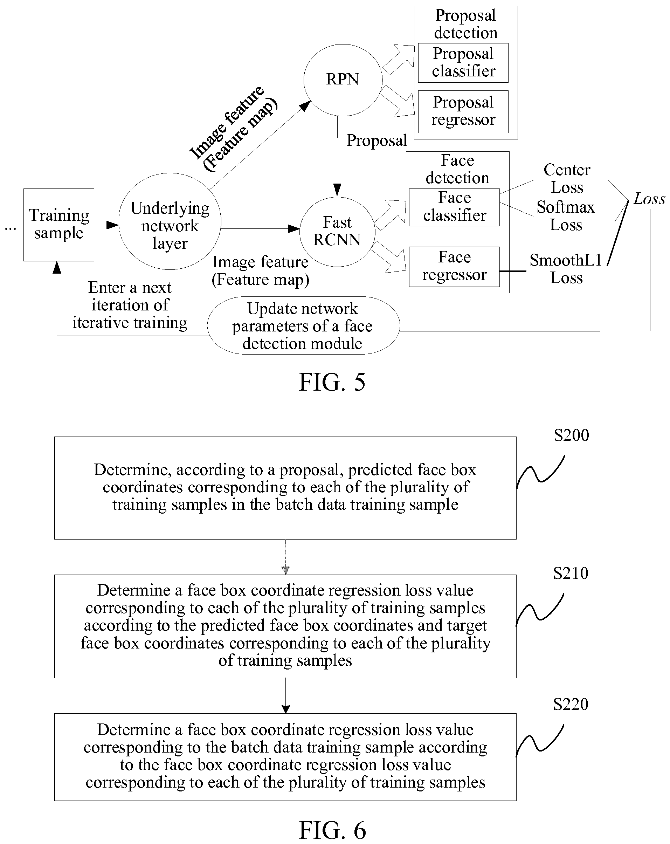

Optionally, as shown in FIG. 5, in an embodiment of the present disclosure, a center loss function (Center Loss) may be set on a face detection layer (for example, a Fast RCNN layer). The center loss function may function on a full-connected feature presentation layer of the face detection layer. The full-connected feature presentation layer may connect and map, in a form of a full connection, all nodes in a feature map to an eigenvector having a fixed length, to obtain an eigenvector of each training sample. In this way, in each time of iterative training, a center loss value corresponding to each training sample in the batch data training sample may be determined by the center loss function using an eigenvector of each training sample in the batch data training sample used in the current iteration, and the center loss value $L_c$ corresponding to the batch data training sample is correspondingly determined.

In addition, a Softmax function may be set on the face detection layer (for example, a Fast RCNN layer). The Softmax function may function on the full-connected feature presentation layer of the face detection layer. During each training of the iterative trainings, the Softmax function may be used to process the eigenvector of each training sample, to determine a prediction probability for classification of each training sample. Then, a difference between a prediction probability for classification of a training sample and a target classification probability (a true classification probability) is represented by using a Softmax Loss (a classification loss function), and the classification loss value $L_{cls}$ corresponding to the batch data training sample is determined.

That is, an input of the Softmax function is an eigenvector of a training sample, and an output is a prediction probability for each sample class to which the training sample belongs. For the Softmax Loss (the classification loss function), p (the prediction probability for classification) and p* (the target probability for classification) of the training sample are inputs, and a loss value (Loss) is an output. A smaller Loss indicates a more accurate classification. In the embodiments of the present disclosure, the Center Loss and the Softmax Loss function on a same layer (that is, the same eigenvectors are inputted). The Center Loss is used as a secondary supervision signal in the face detection optimization, and a smaller Center Loss indicates a smaller difference between intra-class features detected in the face detection. The Softmax Loss drives inter-class features detected in the face detection to be separate from each other, thereby ensuring a distinguishable inter-class difference.

Optionally, further, in an embodiment of the present disclosure, a face box regression prediction function SmoothL1 (a smoothL1 norm function) may be set on the face detection layer (for example, the Fast RCNN layer). Predicted face box coordinates corresponding to each training sample in the batch data training sample are determined based on a proposal by using the SmoothL1. Then, a face box coordinates regression loss value corresponding to each training sample is determined by using a SmoothL1 Loss. An input of the SmoothL1 Loss is predicted face box coordinates and target face box coordinates corresponding to the training sample, and an output is a loss value (Loss). Further, based on this, the face box coordinates regression loss value $L_{reg}$ corresponding to the batch data training sample is determined.

Optionally, in an embodiment of the present disclosure, the target loss value of the face detection may be determined as Loss=$L_{ls}$+$\mu L_c$+$\lambda L_{reg}$. The network parameters of the face detection model is updated by using the target loss value Loss obtained in each iteration, until the target loss value Loss satisfies a minimum value.

Optionally, in an iteration, a process of determining the classification loss value corresponding to the batch data training sample may be as follows:

determining a classification loss value corresponding to each training sample in the batch data training sample according to a prediction probability for classification and a target probability for classification that are corresponding to each training sample in the batch data training sample; and

determining the classification loss value corresponding to the batch data training sample according to the classification loss value corresponding to each training sample in the batch data training sample.

Optionally, in an iteration, a process of determining the face box coordinates regression loss value corresponding to the batch data training sample may be shown in FIG. 6, and includes the following steps S200 to S220.

In step S200, predicted face box coordinates corresponding to each training sample in the batch data training sample are determined based on a proposal.

Optionally, in an embodiment of the present disclosure, a region of interest of each training sample in the batch data training sample in a current iteration may be determined according to a proposal output by a proposal prediction layer, to obtain predicted face box coordinates corresponding to each training sample. Predicted face box coordinates of a training sample may be represented by using horizontal and vertical coordinates of an upper-left vertex and horizontal and vertical coordinates of a lower-right vertex.

Optionally, in an embodiment of the present disclosure, a face box regression prediction function SmoothL1 (a smoothL1 norm function) may be set on a face detection layer (for example, a Fast RCNN layer), and predicted face box coordinates corresponding to each training sample are determined based on the proposal by using the SmoothL1.

in step S210, a face box coordinates regression loss value corresponding to each training sample is determined according to the predicted face box coordinates corresponding to each training sample and target face box coordinates corresponding to each training sample.

Optionally, target face box coordinates corresponding to a training sample may be coordinates corresponding to a true face box in the training sample. For each training sample, in embodiments of the present disclosure, a difference between the predicted face box coordinates corresponding to the training sample and the target face box coordinates corresponding to the training sample may be used to determine a face box coordinates regression loss value corresponding to the training sample. Such processing is performed on each training sample to obtain the face box coordinates regression loss value corresponding to each of the training samples.

Optionally, in an embodiment of the present disclosure, the face box coordinates regression loss value may be represented by a SmoothL1 Loss. An input of the SmoothL1 Loss is the predicted face box coordinates and the target face box coordinates corresponding to the training sample, and an output is a loss value (Loss), where a smaller Loss indicates a more accurate face box regression.

In step S220, a face box coordinates regression loss value corresponding to the batch data training sample is determined according to the face box coordinates regression loss value corresponding to each training sample.

Optionally, in the embodiment of the present disclosure, an average value of face box coordinates regression loss values corresponding to the training samples may be determined according to the face box coordinates regression loss value corresponding to each of the training samples in the batch data training sample, and the face box coordinates regression loss value (SmoothL1 Loss) corresponding to the batch data training sample is determined according to the average value.

Optionally, in an embodiment of the present disclosure, a joint multi-loss function training, including two joint tasks of a face classification and regression, is performed in the iterative training process of the face detection. The classification training is optimized by using both the Center Loss and the Softmax Loss, and the regression training is optimized by using the SmoothL1 Loss. A final face detection optimization target is minimizing a weighted sum of three loss values, i.e., the Center Loss, the Softmax Loss, and the SmoothL1 Loss, corresponding to the batch data training sample.

Optionally, in the embodiments of the present disclosure, a finetuning may be performed on a pre-trained model in a large-scale face recognition task (ImageNet). The center loss value is introduced as a secondary optimization target of the face detection, to guide optimization and training of the face detection model, and to improve a capability of identifying an intra-class difference between faces in the face detection.

Optionally, in the embodiments of the present disclosure, a training sample that is in the training sample set and that is relatively difficult to detect in the face detection may be determined based on a face detection model in a previous iteration of an iterative training process, to determine a batch data training sample to be used in a next iteration, so as to strengthen a capability of detecting the training sample that is relatively difficult to detect in the face detection. Whether a training sample is relatively difficult to detect may be determined by measuring a target loss value corresponding to the training sample. A larger target loss value indicates a longer way for the training sample to realizing the optimization target and a larger detection difficulty.

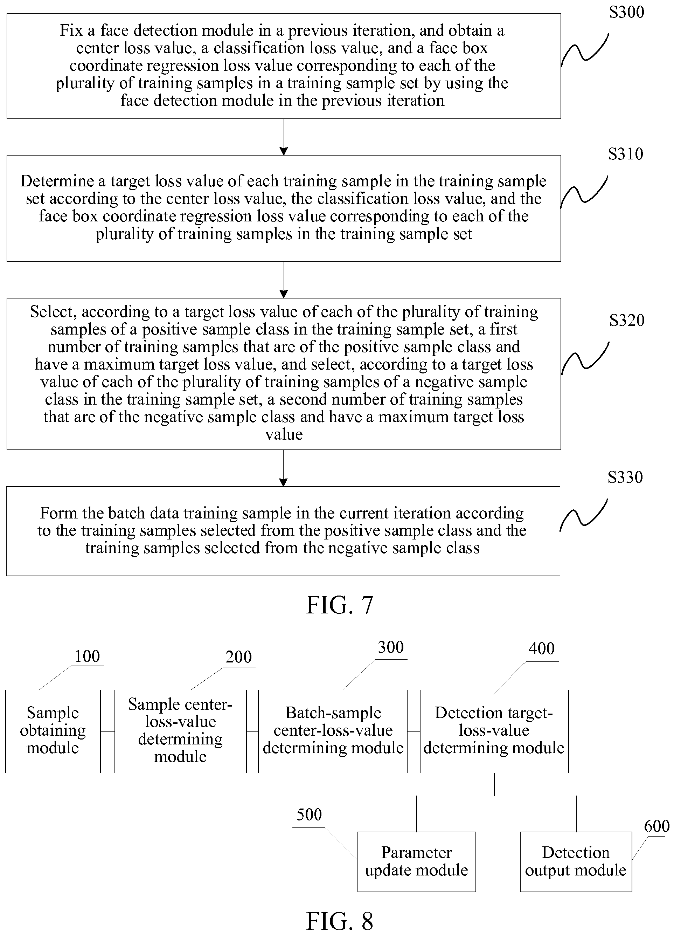

Correspondingly, FIG. 7 is a flowchart of a method for obtaining the batch data training sample in the current iteration according to an embodiment of the present disclosure. Referring to FIG. 7, the method may include the following steps S300 to S320.

In step S300, a face detection model in a previous iteration is fixed, and a center loss value, a classification loss value, and a face box coordinates regression loss value corresponding to each training sample in the training sample set of the face detection model in the previous iteration are obtained.

In step S310, the target loss value of each training sample in the training sample set is determined according to the center loss value, the classification loss value, and the face box coordinates regression loss value corresponding to each training sample in the training sample set.

Optionally, for each training sample, in this embodiment of the present disclosure, a weighed sum of the center loss value, the classification loss value, and the face box coordinates regression loss value of the training sample may be calculated, to obtain a target loss value of the training sample. Processing may be performed on each of the training samples to obtain the target loss value of each of the training samples.

Optionally, for one training sample, the target loss value of the training sample may be represented as: classification loss value + $\mu$ center loss value + $\lambda$ face box coordinates regression loss value.

Optionally, in the embodiment of the present disclosure, for one training sample, the center loss value, the classification loss value, and the face box coordinates regression loss value of the training sample may be summed to obtain a target loss value of the training sample.

In step S320, a first number of training samples that are of the positive sample class and have a maximum target loss value are selected, according to a target loss value of each training sample of a positive sample class in the training sample set, and a second number of training samples that are of the negative sample class and have a maximum target loss value are selected, according to a target loss value of each training sample of a negative sample class in the training sample set, where a ratio of the first number to the second number corresponding to a specified ratio.

Optionally, after obtaining the target loss value of each training sample in the training sample set, in this embodiment of the present disclosure, the training samples in the training sample set may be classified according to positive and negative classes, thereby determining a target loss value of each training sample belonging to a positive sample class in the training sample set and a target loss value of each training sample belonging to a negative sample class in the training sample set. In addition, the training samples belonging to the positive class may be sorted (which may be sorted in descending order of the target loss values or in ascending order of the target loss values) according to the target loss value of each training sample of the positive sample class, and the training samples belonging to the negative class may be sorted according to the target loss value of each training sample of the negative sample class.

Further, according to the specified ratio of the number of the training samples of the positive class to the number of the training samples of the negative class in the batch data training sample, the first number of training samples that are of the positive sample class and have a maximum target loss value are selected according to the target loss value of each training sample of the positive sample class in the training sample set, and the second number of training samples that are of the negative sample class and have a maximum target loss value are selected according to the target loss value of each training sample of the negative sample class in the training sample set, so that a ratio of the first number to the second number corresponds to the specified ratio of the number of the samples of the positive class to the number of the samples of the negative class in the batch data training sample.

Optionally, in this embodiment of the present disclosure, to meet a data balance requirement of the Center Loss for a positive sample (a face) and a negative sample (a non-face), the specified ratio may be set to 1: 1, that is, the first number is the same as the second number.

In step S330, the batch data training sample in the current iteration are formed by the training samples selected from the positive sample class and the training samples selected from the negative sample class.

It can be learned that, in the face detection training method provided in the embodiments of the present disclosure, after the batch data training sample in a previous iteration is sent to the face detection model for training, the face detection may be updated and optimized according to a Center Loss and a Softmax Loss of the batch data training sample in the previous iteration, and a face regressor is updated and optimized according to a SmoothL1 Loss of the batch data training sample in the previous iteration, so that the face detection is optimized toward a direction of minimizing a weighted sum of the Center Loss, the Softmax Loss, and the SmoothL1 Loss.

A batch data training sample used in a next iteration may be determined according to the previous iteration. A target loss value of a Center Loss, a Softmax Loss, and a SmoothL1 Loss of each training sample in the training sample set may be determined by using a face detection model obtained after the previous iteration, thereby selecting, from the training sample set, the first number of training samples that are of the positive class and that have a maximum target loss value and the second number of training samples that are of the negative class and that have a maximum target loss value, to form a Minibatch (that is, the batch data training sample) in the next iteration.

After that, the next iteration is entered. In the next iteration, the Minibatch is sent to the face detection model for training, thereby a cyclical and iterative training is performed, until a weighted sum of a SmoothL1 Loss, a Softmax Loss, and a SmoothL1 Loss of the batch data training sample satisfies a minimum value in an iteration.

In the foregoing described training sample set, training samples that are relatively difficult to detect in face detection obtained after training in the previous iteration is used as the Minibatch to be used in the next iteration, so that the estimation for the Center Loss can be better in each iteration, thereby supervising and learning a feature of the training sample having intra-class difference identifiability much better.

It should further be noted that, unlike a conventional iterative training of the face detection using a stochastic gradient descent algorithm, in this embodiment of the present disclosure, the gradient descent optimization is performed not by simply using a randomly selected batch data training sample (Minibatch). Instead, the Minibatch used in the next iteration is determined in combination with the training sample that is relatively difficult to detect in the training sample set in the previous iteration.

As described herein, the embodiments of the present disclosure provide a robust face detection training method. The method is implemented based on a neural network. In each training process in the iterative training, a Center Loss (a center loss value) that corresponds to a batch data training sample is used as a secondary loss function of a two-class task including a face and a non-face. The Center Loss is combined with a Softmax Loss (a classification loss value) corresponding to the batch data training sample to jointly supervise optimized training of the face detection. A learning process of the face detection may be guided, so that an intra-class difference between faces is reduced and a capability of identifying a face in the face detection is improved while ensures an inter-class difference between a face and a non-face in the face detection.

In addition, an online hard example mining (OHEM) algorithm is used to mine, according to a total loss value of training samples, training samples of a positive class and training samples of a negative class that are relatively difficult to detect in the previous training, and a ratio of the number of positive samples to the number of negative samples remains to be 1: 1, thereby enhancing a capability of classifying a training sample that is relatively difficult to detect in the face detection, and improving the overall performance of the face detection.

In addition, in the present disclosure, anchor boxes (having a plurality of sizes and a plurality of aspect ratios) that are more suitable for a face target and a multiscale training policy are used to improve identifiability for face targets having different resolutions, so that generated proposals can be applicable to different faces. The face detection trained by using the face detection training method provided in the embodiments of the present disclosure can effectively improve accuracy and enhance robustness. Performance comparison between the face detection in the embodiments of the present disclosure and face detection trained in conventional manner may be shown in Table 1.

Table 1

| Method | Recall rate (in a case of 2000 false detections) |
|---|---|
| Faster RCNN | 0.9720 |
| Faster RCNN+OHEM | 0.9745 |
| Faster RCNN+OHEM+Center Loss (according to the embodiments of the present disclosure) | 0.9781 |

It can be learned that the embodiments of the present disclosure can improve a capability of identifying faces in the face detection and enhance face detection robustness.

Hereinafter, a face detection training apparatus provided in an embodiment of the present disclosure is described. Content of the face detection training apparatus described below may be considered as program modules set in an electronic device configured to implement face detection training, to implement the face detection training method provided in the embodiments of the present disclosure. The content of the face detection training apparatus described below and the content of the face detection training method described above may be referenced between each other.

FIG. 8 is a structural block diagram of a face detection training apparatus according to an embodiment of the present disclosure. Referring to FIG. 8, the face detection training apparatus may include:

a sample obtaining module 100, configured to obtain a batch data training sample of a current iteration, where the batch data training sample includes a plurality of training samples of different sample classes;

a sample center-loss-value determining module 200, configured to determine, according to an eigenvector of each training sample and a center eigenvector for a sample class to which each training sample belongs, a center loss value corresponding to each training sample of the plurality of training samples;

a batch-sample center-loss-value determining module 300, configured to determine, according to the center loss value corresponding to each of the plurality of training samples, a center loss value corresponding to the batch data training sample;

a detection target-loss-value determining module 400, configured to determine a target loss value of face detection according to the center loss value corresponding to the batch data training sample; and

a parameter update module 500, configured to: update network parameters of a face detection model according to the target loss value of the face detection in a case that the target loss value of the face detection does not satisfy a specified training convergence condition, and enter a next iteration; and

a detection output module 600, configured to output the face detection in a case that the target loss value of the face detection satisfies the specified training convergence condition.

Optionally, the detection target-loss-value determining module 400, when determining the target loss value of face detection according to the center loss value corresponding to the batch data training sample, is further configured to specifically includes:

determine the target loss value of the face detection according to the center loss value corresponding to the batch data training sample, a classification loss value corresponding to the batch data training sample, and a face box coordinates regression loss value corresponding to the batch data training sample.

Optionally, the detection target-loss-value determining module 400, when determining the target loss value of the face detection according to the center loss value corresponding to the batch data training sample, the classification loss value corresponding to the batch data training sample, and the face box coordinates regression loss value corresponding to the batch data training sample, is further configured to:

sum a product of the center loss value corresponding to the batch data training sample and a first specified weight, a product of the face box coordinates regression loss value corresponding to the batch data training sample and a second specified weight, and the classification loss value corresponding to the batch data training sample, to obtain the target loss value of the face detection.

Optionally, the sample obtaining module 100, when obtaining a batch data training sample of the current iteration, is further configured to:

determine a target loss value corresponding to each of training samples in a training sample set by using a face detection model in a previous iteration;

select, according to a target loss value of each training sample of a positive sample class in the training sample set, a first number of training samples that are of the positive sample class and have a maximum target loss value, and selecting, according to a target loss value of each training sample of a negative sample class in the training sample set, a second number of training samples that are of the negative sample class and have a maximum target loss value, where a ratio of the first number to the second number corresponding to a specified ratio; and

form a batch data training sample of the current iteration according to the training samples selected from the positive sample class and the training samples selected from the negative sample class.

Optionally, the sample obtaining module 100, when determining the target loss value corresponding to each of the training samples in the training sample set by using the face detection model in the previous iteration, is further configured to:

obtain a center loss value, a classification loss value, and a face box coordinates regression loss value corresponding to each of the training samples in the training sample set by using the face detection model in the previous iteration, where the classification loss value corresponding to each of the training samples is determined according to a prediction probability of classification and a target probability for classification that are corresponding to said training sample, and the face box coordinates regression loss value corresponding to each of the training samples is determined according to predicted face box coordinates and target face box coordinates that are corresponding to said training sample; and

determine the target loss value of each training sample in the training sample set according to the center loss value, the classification loss value, and the face box coordinates regression loss value corresponding to each training sample in the training sample set.

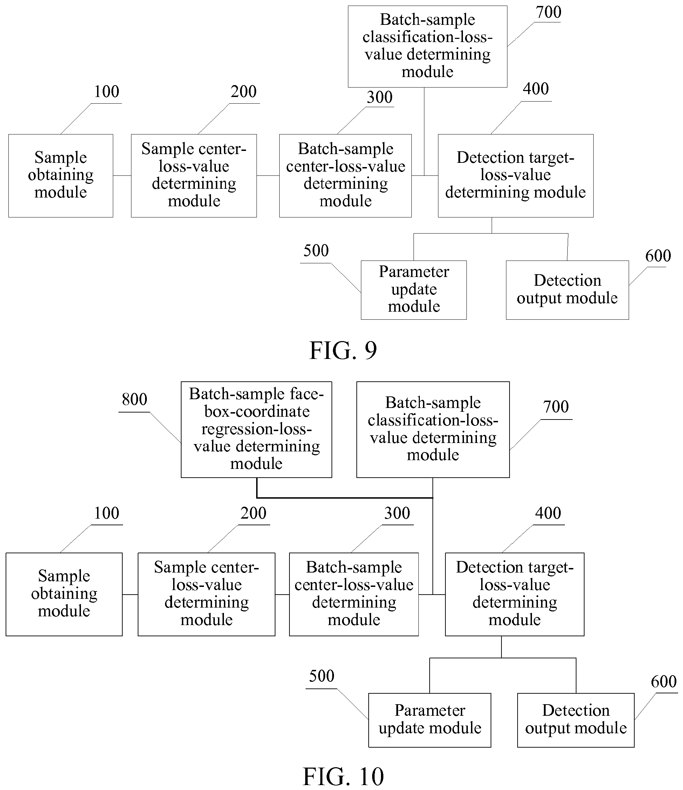

Optionally, FIG. 9 is another structural block diagram of the face detection training apparatus according to an embodiment of the present disclosure. With reference to FIG. 8 and FIG. 9, the face detection training apparatus may further include:

a batch-sample classification-loss-value determining module 700, configured to: determine a classification loss value corresponding to each of the training samples in the batch data training sample according to a prediction probability for classification probability and a target probability for classification that are corresponding to each of the training samples in the batch data training sample; and determine the classification loss value corresponding to the batch data training sample according to the classification loss value corresponding to each of the training samples in the batch data training sample.

Optionally, the sample center-loss-value determining module 200, when determining, according to the eigenvector of each training sample and the center eigenvector for a sample class to which each training sample belongs, the center loss value corresponding to each training sample, is further configured to:

determine the eigenvector of each training sample in the batch data training sample and the center eigenvector of each sample class in the batch data training sample; and

for each training sample in the batch data training sample, determining a distance between the eigenvector of each training sample and the center eigenvector for the sample class to which the training sample in the batch data training sample belongs, to obtain a center loss value corresponding to the training sample.

Optionally, the sample center-loss-value determining module 200, when determining the center eigenvector of each sample class in the batch data training sample, is configured to:

determine training samples that are in the batch data training sample and that belong to the sample class for each sample class;

determine, according to eigenvectors of the training samples that are in the batch data training sample and that belong to the sample class, an average value of the eigenvectors of the training samples belonging to the sample class, to obtain an update variable of the center eigenvector for the sample class in the batch data training sample; and

obtain the center eigenvector for the sample class in the batch data training sample according to the update variable and a specified learning rate.

Optionally, FIG. 10 shows a still another structural block diagram of the face detection training apparatus according to an embodiment of the present disclosure. With reference to FIG. 9 and FIG. 10, the face detection training apparatus may further include:

a batch-sample face-box-coordinate regression-loss-value determining module 800, configured to:

determine predicted face box coordinates corresponding to each of the training samples in the batch data training sample according to a proposal regressor;

determine a face box coordinates regression loss value corresponding to each of the training samples according to the predicted face box coordinates corresponding to each of the training samples and target face box coordinates corresponding to each of the training samples; and

determine a face box coordinates regression loss value corresponding to the batch data training sample according to the face box coordinates regression loss value corresponding to each of the training samples.

Optionally, the parameter update module 500, when updating network parameters of a face detection model according to the target loss value of the face detection, is further configured to: :
update the network parameters of the face detection model through a back propagation according to the target loss value of the face detection.

Optionally, the parameter update module 500, when updating the network parameter of the face detection model through the back propagation according to the target loss value of the face detection, is further configured to:

determine a parameter update value of the face detection according to the target loss value of the face detection and network parameters of a face detection model in a previous iteration; and

update the network parameter of the face detection model in the previous iteration according to the parameter update value of the face detection.

Optionally, the face detection training apparatus provided in this embodiment of the present disclosure may be further configured to:

predefine a plurality of anchor boxes, the plurality of anchor boxes having different sizes and aspect ratios; and

determine a sub-box in the training sample by using the predefined plurality of anchor boxes, and

predict a proposal by using the sub-box.

An embodiment of the present disclosure further provides an electronic device. A hardware structure of the electronic device may be shown in FIG. 3, which includes at least one memory and at least one processor.

The memory stores a program, when being invoked by the processor, cause the processor for:

obtaining a batch data training sample in a current iteration, the batch data training sample including a plurality of training samples of different sample classes;

determining, according to an eigenvector of each of the plurality of training samples and a center eigenvector for a sample class to which each of the plurality of training sample belongs, a center loss value corresponding to each of the plurality of training samples;

determining, according to the center loss value corresponding to each of the plurality of training samples, a center loss value corresponding to the batch data training sample;

determining a target loss value of face detection according to at least the center loss value corresponding to the batch data training sample;

updating network parameters of a face detection model according to the target loss value of the face detection, and entering a next iteration in a case that the target loss value of the face detection does not satisfy a specified training convergence condition; and

outputting a face detection training result if the target loss value of the face detection satisfies the specified training convergence condition.

It should be noted that the embodiments in this specification are all described in a progressive manner. Description of each of the embodiments focuses on differences from other embodiments, and reference may be made to each other for the same or similar parts among the embodiments. The apparatus embodiments are substantially similar to the method embodiments and therefore are only briefly described, and reference may be made to the method embodiments for the associated part.

Persons skilled in the art may further realize that, in combination with the embodiments herein, units and algorithm, steps of each example described can be implemented with electronic hardware, computer software, or the combination thereof. In order to clearly describe the interchangeability between the hardware and the software, compositions and steps of each example have been generally described according to functions in the foregoing descriptions. Whether the functions are executed in a mode of hardware or software depends on particular applications and design constraint conditions of the technical solutions. Persons skilled in the art can use different methods to implement the described functions for each particular application, but it should not be considered that the implementation goes beyond the scope of the embodiments of the present disclosure.

In combination with the embodiments herein, steps of the method or algorithm described may be directly implemented using hardware, a software module executed by a processor, or the combination thereof. The software module may be placed in a random access memory (RAM), a memory, a read-only memory (ROM), an electrically programmable ROM (EPROM), an electrically erasable programmable ROM (EEPROM), a register, a hard disk, a removable magnetic disk, a CD-ROM, or any storage medium of other forms well-known in the technical field.

The above description of the disclosed embodiments enables persons skilled in the art to implement or use the present disclosure. Various modifications to these embodiments are obvious to persons skilled in the art, the general principles defined in the present disclosure may be implemented in other embodiments without departing from the scope of the present disclosure. Therefore, the present disclosure is not limited to these embodiments illustrated in the present disclosure, but needs to conform to the broadest scope consistent with the principles and novel features disclosed in the present disclosure.

**Claims**

1. A method for training a face detection model constructed based on a convolutional neural network, CNN, comprising:

   obtaining (S100) a batch data training sample of a current iteration, the batch data training sample comprising a plurality of training samples of different sample classes;
   determining (S110), according to an eigenvector of each of the plurality of training samples and a center eigenvector for a sample class to which each of the plurality of training samples belongs, a center loss value corresponding to each of the plurality of training samples;
   determining (S120), according to the center loss value corresponding to each of the plurality of training samples, a center loss value corresponding to the batch data training sample, wherein the center loss value of a training sample represents a distance between the eigenvector of the training sample and the center eigenvector for the sample class to which the training sample belongs;
   determining (S130) a target loss value of face detection according to the center loss value corresponding to the batch data training sample, a classification loss value corresponding to the batch data training sample, and a face box coordinates regression loss value corresponding to the batch data training sample, wherein the classification loss value corresponding to the batch data training sample is determined according to a difference between a prediction probability for classification and a target probability for classification of each training sample in the batch data training sample, wherein the face box coordinates regression loss value corresponding to each of the training samples is determined according to predicted face box coordinates and target face box coordinates that are corresponding to each of the training samples; and
   outputting (S160) the trained face detection model based on the convolutional neural network in a case that the target loss value of the face detection satisfies a specified training convergence condition,
   **characterized in that**, sample classes of the plurality of training samples comprise a positive sample class and a negative sample class, and the obtaining (S100) the batch data training sample in the current iteration comprises:

      determining (S310) a previous target loss value corresponding to each of training samples in a training sample set by using a model in a previous iteration;
      selecting (S320), according to a previous target loss value of each of the training samples of the positive sample class in the training sample set, a first number of training samples having a maximum target loss value from the positive sample class,
      selecting (S320), according to a target loss value of each training sample of the negative sample class in the training sample set, a second number of training samples having a maximum target loss value from the negative sample class, wherein a ratio of the first number to the second number corresponding to a specified ratio; and
      forming (S330) the batch data training sample in the current iteration according to the training samples selected from the positive sample class and the training samples selected from the negative sample class.

2. The face detection training method according to claim 1, wherein the method further comprises:
   updating (S150) network parameters of a face detection model according to the target loss value of the face detection in a case that the target loss value of the face detection does not satisfy the specified training convergence condition, and entering a next iteration of the steps of obtaining a batch data training sample, determining a center loss value corresponding to each of the plurality of training samples, determining a center loss value corresponding to the batch data training sample, determining a target loss value of face detection, and determining whether the target loss value satisfies a specified training convergence criterion (S140).

3. The face detection training method according to claim 1, wherein the determining (S130) the target loss value of the face detection according to the center loss value corresponding to the batch data training sample, a classification loss value corresponding to the batch data training sample, and a face box coordinates regression loss value corresponding to the batch data training sample comprises:

summing a product of the center loss value corresponding to the batch data training sample and a first specified weight, a product of the face box coordinates regression loss value corresponding to the batch data training sample and a second specified weight, and the classification loss value corresponding to the batch data training sample, to obtain the target loss value of the face detection.

4. The face detection training method according to claim 1, wherein the determining (S130) a target loss value corresponding to each of training samples in a training sample set by using a model in a previous iteration comprises:

obtaining a center loss value, a classification loss value, and a face box coordinates regression loss value corresponding to each of the training samples in the training sample set by using the model in the previous iteration, wherein the classification loss value corresponding to each of the training samples is determined according to a prediction probability of classification and a target probability for classification that are corresponding to each of the training samples, ; and

determining (S130) the target loss value of each of the training samples in the training sample set according to the center loss value, the classification loss value, and the face box coordinates regression loss value corresponding to each of the training samples in the training sample set.

5. The face detection training method according to claim 1, wherein the process of determining the classification loss value corresponding to the batch data training sample comprises:

determining a classification loss value corresponding to each of the plurality of training samples in the batch data training sample according to a prediction probability for classification and a target probability for classification that are corresponding to each of the plurality of training samples in the batch data training sample; and

determining the classification loss value corresponding to the batch data training sample according to the classification loss value corresponding to each of the plurality of training samples in the batch data training sample.

6. The face detection training method according to claim 1, wherein the process of determining the face box coordinates regression loss value corresponding to the batch data training sample comprises:

determining predicted face box coordinates corresponding to each of the plurality of training samples in the batch data training sample;

determining a face box coordinates regression loss value corresponding to each of the plurality of training samples according to the predicted face box coordinates corresponding to each of the plurality of training samples and target face box coordinates corresponding to each of the plurality of training samples; and

determining the face box coordinates regression loss value corresponding to the batch data training sample according to the face box coordinates regression loss value corresponding to each of the plurality of training samples.

7. The face detection training method according to claim 1, wherein the determining (S110), according to an eigenvector of each of the plurality of training samples and a center eigenvector for a sample class to which each of the plurality of training samples belongs, a center loss value corresponding to each training sample comprises:

determining the eigenvector of each of the plurality of training sample in the batch data training sample and a center eigenvector of each of sample classes in the batch data training sample; and

for each of the plurality of training samples in the batch data training sample, determining a distance between the eigenvector of each of the plurality of training samples and the center eigenvector for a sample class to which each of the plurality of training samples in the batch data training sample belongs, to obtain the center loss value corresponding to each of the plurality of training samples.

8. The face detection training method according to claim 7, wherein the determining a center eigenvector of each of sample classes in the batch data training sample comprises:

for a sample class, determining training samples that are in the batch data training sample and that belong to the sample class;

determining, according to eigenvectors of the training samples that are in the batch data training sample and that belong to the sample class, an average value of the eigenvectors of the training samples belonging to the sample class, to obtain an update variable of a center eigenvector for the sample class in the batch data training sample; and

obtaining the center eigenvector for the sample class in the batch data training sample according to the update variable and a specified learning rate.

9. The face detection training method according to any one of claims 1 to 3, wherein the updating network parameters of a face detection model according to the target loss value of the face detection comprises:
updating the network parameter of the face detection model through a back propagation according to the target loss value of the face detection.

10. The face detection training method according to claim 9, wherein the updating the network parameter of the face detection model constructed based on the convolutional neural network, CNN, through a back propagation according to the target loss value of the face detection comprises:

determining a parameter update value of the face detection according to the target loss value of the face detection and network parameters of a face detection model in a previous iteration; and
updating the network parameters of the face detection model in the previous iteration according to the parameter update value of the face detection.

11. The face detection training method according to claim 1, wherein the convolutional neural network has an underlying network layer, a proposal prediction layer and a face detection layer, wherein the proposal prediction layer comprises a region proposal network, RPN, layer adapted to generate candidate bounding boxes, wherein the method comprises:

predefining a plurality of anchor boxes, the plurality of anchor boxes having different sizes and aspect ratios; and
determining a sub-box in the training sample by using the plurality of predefined anchor boxes, and predicting a proposal by using the sub-box.

12. A face detection training apparatus, comprising a memory and a processor,
the memory storing a program, when being executed by the processor, causes the processor to perform the method according to any one of claims 1 to 11.

13. A computer-readable storage medium comprising instructions, when being executed on a computer, cause the computer to perform the method according to any one of claims 1 to 11.

**Patentansprüche**

1. Verfahren zum Trainieren eines Modells zur Gesichtserkennung, das basierend auf einem Convolutional Neural Network, CNN, aufgebaut ist, aufweisend:

Erhalten (S100) einer Stapeldaten-Trainingsprobe einer momentanen Iteration, wobei die Stapeldaten-Trainingsprobe eine Vielzahl von Trainingsproben verschiedener Probenklassen aufweist;
Bestimmen (S110), entsprechend einem Eigenvektor jeder der Vielzahl von Trainingsproben und einem Zentrum-Eigenvektor für eine Probenklasse, zu der jede der Vielzahl von Trainingsproben gehört, eines Zentrum-Verlustwertes, der jeder der Vielzahl von Trainingsproben entspricht;
Bestimmen (S120), entsprechend dem Zentrum-Verlustwert, der jeder der Vielzahl von Trainingsproben entspricht, eines Zentrum-Verlustwertes, der der Stapeldaten-Trainingsprobe entspricht, wobei der Zentrum-Verlustwert einer Trainingsprobe einen Abstand zwischen dem Eigenvektor der Trainingsprobe und dem Zentrum-Eigenvektor für die Probenklasse, zu der die Trainingsprobe gehört, darstellt;
Bestimmen (S130) eines Zielverlustwertes der Gesichtserkennung entsprechend dem Zentrum-Verlustwert, der der Stapeldaten-Trainingsprobe entspricht, eines Klassifizierungsverlustwertes, der der Stapeldaten-Trainingsprobe entspricht, und eines Gesichtsboxkoordinaten-Regressionsverlustwertes, der der Stapeldaten-Trainingsprobe entspricht, wobei der Klassifizierungsverlustwert, der der Stapeldaten-Trainingsprobe entspricht, entsprechend einer Differenz zwischen einer Vorhersagewahrscheinlichkeit für die Klassifizierung und einer Zielwahrscheinlichkeit für die Klassifizierung jeder Trainingsprobe in der Stapeldaten-Trainingsprobe bestimmt wird, wobei der Gesichtsboxkoordinaten-Regressionsverlustwert, der jeder der Trainingsproben entspricht, entsprechend den vorhergesagten Gesichtsboxkoordinaten und den Ziel-Gesichtsboxkoordinaten bestimmt wird, die jeder der Trainingsproben entsprechen; und

Ausgeben (S160) des trainierten Modells zur Gesichtserkennung basierend auf dem Convolutional Neural Network in einem Fall, dass der Zielverlustwert der Gesichtserkennung eine spezifizierte Trainingskonvergenzbedingung erfüllt,

**dadurch gekennzeichnet, dass** die Probenklassen der Vielzahl von Trainingsproben eine positive Probenklasse und eine negative Probenklasse aufweisen, und das Erhalten (S100) der Stapeldaten-Trainingsprobe in der momentanen Iteration aufweist: Bestimmen (S310) eines vorherigen Zielverlustwertes, der jeder der Trainingsproben in einem Trainingsprobensatz entspricht, unter Verwendung eines Modells in einer vorherigen Iteration;

Auswählen (S320), entsprechend einem vorherigen Zielverlustwert jeder der Trainingsproben der positiven Probenklasse in dem Trainingsprobensatz, einer ersten Anzahl von Trainingsproben mit einem maximalen Zielverlustwert aus der positiven Probenklasse,

Auswählen (S320), entsprechend einem Zielverlustwert jeder Trainingsprobe der negativen Probenklasse in dem Trainingsprobensatz, einer zweiten Anzahl von Trainingsproben mit einem maximalen Zielverlustwert aus der negativen Probenklasse, wobei ein Verhältnis der ersten Anzahl zu der zweiten Anzahl einem vorgegebenen Verhältnis entspricht; und

Bilden (S330) der Stapeldaten-Trainingsprobe in der aktuellen Iteration gemäß den Trainingsproben, die aus der positiven Probenklasse ausgewählt sind, und den Trainingsproben, die aus der negativen Probenklasse ausgewählt sind.

2. Das Gesichtserkennungs-Trainingsverfahren nach Anspruch 1, wobei das Verfahren ferner aufweist:
Aktualisieren (S150) von Netzwerkparametern eines Gesichtserkennungsmodells entsprechend dem Zielverlustwert der Gesichtserkennung in einem Fall, dass der Zielverlustwert der Gesichtserkennung die vorgegebene Trainingskonvergenzbedingung nicht erfüllt, und Eintreten in eine nächste Iteration der Schritte des Erhaltens einer Stapeldaten-Trainingsprobe, des Bestimmens eines Zentrum-Verlustwertes entsprechend jeder der Vielzahl von Trainingsproben, des Bestimmens eines Zentrum-Verlustwertes entsprechend der Stapeldaten-Trainingsprobe, des Bestimmens eines Zielverlustwertes der Gesichtserkennung, und des Bestimmens, ob der Zielverlustwert ein spezifiziertes Trainingskonvergenzkriterium erfüllt (S140).

3. Das Gesichtserkennungs-Trainingsverfahren nach Anspruch 1, wobei das Bestimmen (S130) des Zielverlustwertes der Gesichtserkennung entsprechend dem Zentrum-Verlustwert, der der Stapeldaten-Trainingsprobe entspricht, eines Klassifizierungsverlustwertes, der der Stapeldaten-Trainingsprobe entspricht, und eines Gesichtsboxkoordinaten-Regressionsverlustwertes, der der Stapeldaten-Trainingsprobe entspricht, aufweist:
Summieren eines Produkts des Zentrum-Verlustwerts, der der Stapeldaten-Trainingsprobe entspricht, und eines ersten vorgegebenen Gewichts, eines Produkts der Gesichtsboxkoordinaten-Regressionsverlustwerts, der der Stapeldaten-Trainingsprobe entspricht, und eines zweiten vorgegebenen Gewichts, und des Klassifizierungsverlustwerts, der der Stapeldaten-Trainingsprobe entspricht, um den Zielverlustwert der Gesichtserkennung zu erhalten.

4. Das Gesichtserkennungs-Trainingsverfahren nach Anspruch 1, wobei das Bestimmen (S130) eines Zielverlustwertes, der jeder der Trainingsproben in einem Trainingsprobensatz entspricht, unter Verwendung eines Modells in einer vorherigen Iteration aufweist

Erhalten eines Zentrum-Verlustwerts, eines Klassifizierungsverlustwerts und eines Gesichtsboxkoordinaten-Regressionsverlustwerts, die jeder der Trainingsproben in dem Trainingsprobensatz entsprechen, unter Verwendung des Modells in der vorherigen Iteration, wobei der Klassifizierungsverlustwert, der jeder der Trainingsproben entspricht, entsprechend einer Vorhersagewahrscheinlichkeit der Klassifizierung und einer Zielwahrscheinlichkeit für die Klassifizierung, die jeder der Trainingsproben entsprechen, bestimmt wird, und
Bestimmen (S130) des Zielverlustwerts jeder der Trainingsproben in dem Trainingsprobensatz entsprechend dem Zentrum-Verlustwert, dem Klassifizierungsverlustwert und dem Gesichtsboxkoordinaten-Regressionsverlustwert, der jeder der Trainingsproben in dem Trainingsprobensatz entspricht.

5. Das Gesichtserkennungs-Trainingsverfahren nach Anspruch 1, wobei der Prozess des Bestimmens des Klassifizierungsverlustwertes, der der Stapeldaten-Trainingsprobe entspricht, aufweist:

Bestimmen eines Klassifizierungsverlustwertes entsprechend jeder der Vielzahl von Trainingsproben in der Stapeldaten-Trainingsprobe entsprechend einer Vorhersagewahrscheinlichkeit für die Klassifizierung und einer Zielwahrscheinlichkeit für die Klassifizierung, die jeder der Vielzahl von Trainingsproben in der Stapeldaten-Trainingsprobe entsprechen; und

Bestimmen des Klassifizierungsverlustwertes, der der Stapeldaten-Trainingsprobe entspricht, entsprechend dem Klassifizierungsverlustwert, der jeder der Vielzahl von Trainingsproben in der Stapeldaten-Trainingsprobe entspricht.

6. Das Gesichtserkennungs-Trainingsverfahren nach Anspruch 1, wobei der Prozess des Bestimmens des Gesichtsboxkoordinaten-Regressionsverlustwerts entsprechend der Stapeldaten-Trainingsprobe aufweist:

Bestimmen der vorhergesagten Gesichtsboxkoordinaten, die jeder der Vielzahl von Trainingsproben in der Stapeldaten-Trainingsprobe entsprechen;

Bestimmen eines Gesichtsboxkoordinaten-Regressionsverlustwertes, der jeder der Vielzahl von Trainingsproben entspricht, entsprechend den vorhergesagten Gesichtsboxkoordinaten, die jeder der Vielzahl von Trainingsproben entsprechen, und Ziel-Gesichtsboxkoordinaten, die jeder der Vielzahl von Trainingsproben entsprechen; und

Bestimmen des Gesichtsboxkoordinaten-Regressionsverlustwertes, der der Stapeldaten-Trainingsprobe entspricht, entsprechend dem Gesichtsboxkoordinaten-Regressionsverlustwert, der jeder der Vielzahl von Trainingsproben entspricht.

7. Das Gesichtserkennungs-Trainingsverfahren nach Anspruch 1, wobei das Bestimmen (S110), entsprechend einem Eigenvektor jeder der Vielzahl von Trainingsproben und einem Zentrum-Eigenvektor für eine Probenklasse, zu der jede der Vielzahl von Trainingsproben gehört, eines Zentrum-Verlustwerts, der jeder Trainingsprobe entspricht, aufweist:

Bestimmen des Eigenvektors jeder der Vielzahl von Trainingsproben in der Stapeldaten-Trainingsprobe und eines Zentrum-Eigenvektors jeder der Probenklassen in der Stapeldaten-Trainingsprobe; und

für jede der Vielzahl von Trainingsproben in der Stapeldaten-Trainingsprobe, Bestimmen eines Abstands zwischen dem Eigenvektor jeder der Vielzahl von Trainingsproben und dem Zentrum-Eigenvektor für eine Probenklasse, zu der jede der Vielzahl von Trainingsproben in der Stapeldaten-Trainingsprobe gehört, um den Zentrum-Verlustwert zu erhalten, der jeder der Vielzahl von Trainingsproben entspricht.

8. Das Gesichtserkennungs-Trainingsverfahren nach Anspruch 7, wobei das Bestimmen eines Zentrum-Eigenvektors jeder der Probenklassen in der Stapeldaten-Trainingsprobe aufweist:

für eine Probenklasse, Bestimmen von Trainingsproben, die sich in der Stapeldaten-Trainingsprobe befinden und die zu der Probenklasse gehören;

Bestimmen, entsprechend den Eigenvektoren der Trainingsproben, die sich in der Stapeldaten-Trainingsprobe befinden und die zu der Probenklasse gehören, eines Durchschnittswertes der Eigenvektoren der Trainingsproben, die zu der Probenklasse gehören, um eine Aktualisierungsvariable eines Zentrum-Eigenvektors für die Probenklasse in der Stapeldaten-Trainingsprobe zu erhalten; und

Erhalten des Zentrum-Eigenvektors für die Probenklasse in der Stapeldaten-Trainingsprobe entsprechend der Aktualisierungsvariablen und einer vorgegebenen Lernrate.

9. Das Gesichtserkennungs-Trainingsverfahren nach einem der Ansprüche 1 bis 3, wobei das Aktualisieren der Netzwerkparameter eines Gesichtserkennungsmodells entsprechend dem Zielverlustwert der Gesichtserkennung aufweist:

Aktualisieren des Netzwerkparameters des Gesichtserkennungsmodells durch eine Rückpropagierung entsprechend dem Zielverlustwert der Gesichtserkennung.

10. Das Gesichtserkennungs-Trainingsverfahren nach Anspruch 9, wobei das Aktualisieren des Netzwerkparameters des Gesichtserkennungsmodells, das basierend auf dem Convolutional Neural Network, CNN, aufgebaut ist, durch eine Rückpropagierung entsprechend dem Zielverlustwert der Gesichtserkennung aufweist:

Bestimmen eines Parameteraktualisierungswertes der Gesichtserkennung entsprechend dem Zielverlustwert der Gesichtserkennung und der Netzwerkparameter eines Gesichtserkennungsmodells in einer vorherigen Iteration; und

Aktualisieren der Netzwerkparameter des Gesichtserkennungsmodells in der vorherigen Iteration entsprechend dem Parameteraktualisierungswert der Gesichtserkennung.

11. Das Gesichtserkennungs-Trainingsverfahren nach Anspruch 1, wobei das Convolutional Neural Network eine zugrundeliegende Netzwerkschicht, eine Vorschlagsvorhersageschicht und eine Gesichtserkennungsschicht aufweist, wobei die Vorschlagsvorhersageschicht eine Schicht eines Bereichsvorschlagsnetzwerks, RPN, aufweist, die ausgebildet ist, um Kandidaten-Begrenzungsboxen zu erzeugen, wobei das Verfahren aufweist:

Vordefinieren einer Vielzahl von Ankerboxen, wobei die Vielzahl von Ankerboxen unterschiedliche Größen und Seitenverhältnisse aufweisen; und
Bestimmen einer Subbox in der Trainingsprobe unter Verwendung der Vielzahl von vordefinierten Ankerboxen, und Vorhersagen eines Vorschlags unter Verwendung der Subbox.

12. Vorrichtung zum Gesichtserkennung-Training, das einen Speicher und einen Prozessor aufweist,
wobei der Speicher ein Programm speichert, das, wenn es von dem Prozessor ausgeführt wird, den Prozessor veranlasst, das Verfahren gemäß einem der Ansprüche 1 bis 11 auszuführen.

13. Computerlesbares Speichermedium, das Anweisungen aufweist, die, wenn sie auf einem Computer ausgeführt werden, den Computer veranlassen, das Verfahren gemäß einem der Ansprüche 1 bis 11 auszuführen.

## Revendications

1. Procédé permettant d'entraîner un modèle de détection de visage construit sur la base d'un réseau neuronal convolutif, CNN, comprenant :

l'obtention (S100) d'un échantillon d'entraînement de données par lot d'une itération actuelle, l'échantillon d'entraînement de données par lot comprenant une pluralité d'échantillons d'entraînement de différentes classes d'échantillons ;
la détermination (S110), selon un vecteur propre de chacun de la pluralité d'échantillons d'entraînement et d'un vecteur propre central pour une classe d'échantillons à laquelle appartient chacun de la pluralité d'échantillons d'entraînement, d'une valeur de perte centrale correspondant à chacun de la pluralité d'échantillons d'entraînement ;
la détermination (S120), selon la valeur de perte centrale correspondant à chacun de la pluralité d'échantillons d'entraînement, d'une valeur de perte centrale correspondant à l'échantillon d'entraînement de données par lot, dans lequel la valeur de perte centrale d'un échantillon d'entraînement représente une distance entre le vecteur propre de l'échantillon d'entraînement et le vecteur propre central pour la classe d'échantillons à laquelle appartient l'échantillon d'entraînement ;
la détermination (S130) d'une valeur de perte cible de détection de visage selon la valeur de perte centrale correspondant à l'échantillon d'entraînement de données par lot, d'une valeur de perte de classification correspondant à l'échantillon d'entraînement de données par lot et d'une valeur de perte de régression de coordonnées de zone de visage correspondant à l'échantillon d'entraînement de données par lot, dans lequel la valeur de perte de classification correspondant à l'échantillon d'entraînement de données par lot est déterminée selon une différence entre une probabilité de prédiction pour une classification et une probabilité cible pour une classification de chaque échantillon d'entraînement dans l'échantillon d'entraînement de données par lot, dans lequel la valeur de perte de régression de coordonnées de zone de visage correspondant à chacun des échantillons d'entraînement est déterminée selon des coordonnées de zone de visage prédites et des coordonnées de zone de visage cibles qui correspondent à chacun des échantillons d'entraînement ; et
l'émission (S160) du modèle de détection de visage entraîné sur la base du réseau neuronal convolutif dans le cas où la valeur de perte cible de la détection de visage satisfait une condition de convergence d'entraînement spécifiée,
caractérisé en ce que des classes d'échantillons de la pluralité d'échantillons d'entraînement comprennent une classe d'échantillons positifs et une classe d'échantillons négatifs, et l'obtention (S100) de l'échantillon d'entraînement de données par lot dans l'itération actuelle comprend :

la détermination (S310) d'une valeur de perte cible précédente correspondant à chacun des échantillons d'entraînement d'un ensemble d'échantillons d'entraînement en utilisant un modèle lors d'une itération précédente ;
la sélection (S320), selon une valeur de perte cible précédente de chacun des échantillons d'entraînement de la classe d'échantillons positifs dans l'ensemble d'échantillons d'entraînement, d'un premier nombre d'échantillons d'entraînement ayant une valeur de perte cible maximale dans la classe d'échantillons positifs,

la sélection (S320), selon une valeur de perte cible de chaque échantillon d'entraînement de la classe d'échantillons négatifs dans l'ensemble d'échantillons d'entraînement, d'un second nombre d'échantillons d'entraînement ayant une valeur de perte cible maximale dans la classe d'échantillons négatifs, dans lequel le rapport entre le premier nombre et le second nombre correspond à un rapport spécifié ; et

la formation (S330) de l'échantillon d'entraînement de données par lot dans l'itération actuelle selon les échantillons d'entraînement sélectionnés dans la classe d'échantillons positifs et des échantillons d'entraînement sélectionnés dans la classe d'échantillons négatifs.

2. Procédé d'entraînement de détection de visage selon la revendication 1, dans lequel le procédé comprend en outre :
la mise à jour (S150) de paramètres de réseau d'un modèle de détection de visage selon la valeur de perte cible de la détection de visage dans le cas où la valeur de perte cible de la détection de visage ne satisfait pas la condition de convergence d'entraînement spécifiée, et l'entrée dans une itération suivante des étapes consistant à obtenir un échantillon d'entraînement de données par lot, à déterminer une valeur de perte centrale correspondant à chacun de la pluralité d'échantillons d'entraînement, à déterminer une valeur de perte centrale correspondant à l'échantillon d'entraînement de données par lot, à déterminer une valeur de perte cible de détection de visage, et à déterminer si la valeur de perte cible satisfait un critère de convergence d'entraînement spécifié (S140).

3. Procédé d'entraînement de détection de visage selon la revendication 1, dans lequel la détermination (S130) de la valeur de perte cible de la détection de visage selon la valeur de perte centrale correspondant à l'échantillon d'entraînement de données par lot, d'une valeur de perte de classification correspondant à l'échantillon d'entraînement de données par lot, et d'une valeur de perte de régression de coordonnées de zone de visage correspondant à l'échantillon d'entraînement de données par lot comprend :
l'addition d'un produit de la valeur de perte centrale correspondant à l'échantillon d'entraînement de données par lot et d'une première pondération spécifiée, d'un produit de la valeur de perte de régression de coordonnées de zone de visage correspondant à l'échantillon d'entraînement de données par lot et d'une seconde pondération spécifiée, et de la valeur de perte de classification correspondant à l'échantillon d'entraînement de données par lot, afin d'obtenir la valeur de perte cible de la détection de visage.

4. Procédé d'entraînement de détection de visage selon la revendication 1, dans lequel la détermination (S130) d'une valeur de perte cible correspondant à chacun des échantillons d'entraînement dans un ensemble d'échantillons d'entraînement en utilisant un modèle dans une itération précédente comprend :

l'obtention d'une valeur de perte centrale, d'une valeur de perte de classification et d'une valeur de perte de régression de coordonnées de zone de visage correspondant à chacun des échantillons d'entraînement dans l'ensemble d'échantillons d'entraînement en utilisant le modèle dans l'itération précédente, dans lequel la valeur de perte de classification correspondant à chacun des échantillons d'entraînement est déterminée selon une probabilité de prédiction de classification et une probabilité cible pour une classification qui correspondent à chacun des échantillons d'entraînement ; et

la détermination (S130) de la valeur de perte cible de chacun des échantillons d'entraînement dans l'ensemble d'échantillons d'entraînement selon la valeur de perte centrale, la valeur de perte de classification et la valeur de perte de régression de coordonnées de zone de visage correspondant à chacun des échantillons d'entraînement dans l'ensemble d'échantillons d'entraînement.

5. Procédé d'entraînement de détection de visage selon la revendication 1, dans lequel le processus de détermination de la valeur de perte de classification correspondant à l'échantillon d'entraînement de données par lot comprend :

la détermination d'une valeur de perte de classification correspondant à chacun de la pluralité d'échantillons d'entraînement dans l'échantillon d'entraînement de données par lot selon une probabilité de prédiction pour une classification et d'une probabilité cible pour une classification qui correspondent à chacun de la pluralité d'échantillons d'entraînement dans l'échantillon d'entraînement de données par lot ; et

la détermination de la valeur de perte de classification correspondant à l'échantillon d'entraînement de données par lot selon la valeur de perte de classification correspondant à chacun de la pluralité d'échantillons d'entraînement dans l'échantillon d'entraînement de données par lot.

6. Procédé d'entraînement de détection de visage selon la revendication 1, dans lequel le processus de détermination de la valeur de perte de régression de coordonnées de zone de visage correspondant à l'échantillon d'entraînement de données par lot comprend :

> la détermination de coordonnées de zone de visage prédites correspondant à chacun de la pluralité d'échantillons d'entraînement dans l'échantillon d'entraînement de données par lot ;
> la détermination d'une valeur de perte de régression de coordonnées de zone de visage correspondant à chacun de la pluralité d'échantillons d'entraînement selon les coordonnées de zone de visage prédites correspondant à chacun de la pluralité d'échantillons d'entraînement et des coordonnées de zone de visage cibles correspondant à chacun de la pluralité d'échantillons d'entraînement ; et
> la détermination de la valeur de perte de régression de coordonnées de zone de visage correspondant à l'échantillon d'entraînement de données par lot selon la valeur de perte de régression de coordonnées de zone de visage correspondant à chacun de la pluralité d'échantillons d'entraînement.

7. Procédé d'entraînement de détection de visage selon la revendication 1, dans lequel la détermination (S110), selon un vecteur propre de chacun de la pluralité d'échantillons d'entraînement et d'un vecteur propre central pour une classe d'échantillons à laquelle appartient chacun de la pluralité d'échantillons d'entraînement, d'une valeur de perte centrale correspondant à chaque échantillon d'entraînement comprend :

> la détermination du vecteur propre de chacun de la pluralité d'échantillons d'entraînement dans l'échantillon d'entraînement de données par lot et d'un vecteur propre central de chacune des classes d'échantillons dans l'échantillon d'entraînement de données par lot ; et
> pour chacun de la pluralité d'échantillons d'entraînement dans l'échantillon d'entraînement de données par lot, la détermination d'une distance entre le vecteur propre de chacun de la pluralité d'échantillons d'entraînement et du vecteur propre central pour une classe d'échantillons à laquelle appartient chacun de la pluralité d'échantillons d'entraînement dans l'échantillon d'entraînement de données par lot, afin d'obtenir la valeur de perte centrale correspondant à chacun de la pluralité d'échantillons d'entraînement.

8. Procédé d'entraînement de détection de visage selon la revendication 7, dans lequel la détermination d'un vecteur propre central de chacune des classes d'échantillon dans l'échantillon d'entraînement de données par lot comprend :

> pour une classe d'échantillons, la détermination d'échantillons d'entraînement qui font partie de l'échantillon d'entraînement de données par lot et qui appartiennent à la classe d'échantillons ;
> la détermination, selon des vecteurs propres des échantillons d'entraînement qui font partie de l'échantillon d'entraînement de données par lot et qui appartiennent à la classe d'échantillons, d'une valeur moyenne des vecteurs propres des échantillons d'entraînement appartenant à la classe d'échantillons, afin d'obtenir une variable de mise à jour d'un vecteur propre central pour la classe d'échantillons dans l'échantillon d'entraînement de données par lot ; et
> l'obtention du vecteur propre central pour la classe d'échantillon dans l'échantillon d'entraînement de données par lot selon la variable de mise à jour et d'un taux d'apprentissage spécifié.

9. Procédé d'entraînement de détection de visage selon l'une quelconque des revendications 1 à 3, dans lequel la mise à jour de paramètres de réseau d'un modèle de détection de visage selon la valeur de perte cible de la détection de visage comprend :
la mise à jour de paramètres de réseau du modèle de détection de visage par le biais d'une rétropropagation selon la valeur de perte cible de la détection de visage.

10. Procédé d'entraînement de détection de visage selon la revendication 9, dans lequel la mise à jour de paramètres de réseau du modèle de détection de visages construit sur la base du réseau neuronal convolutif, CNN, par le biais d'une rétropropagation, selon la valeur de perte cible de la détection de visage comprend :

> la détermination d'une valeur de mise à jour de paramètres de la détection de visage selon la valeur de perte cible de la détection de visage et des paramètres de réseau d'un modèle de détection de visage lors d'une itération précédente ; et
> la mise à jour des paramètres de réseau du modèle de détection de visage dans l'itération précédente selon la valeur de mise à jour de paramètres de la détection de visage.

11. Procédé d'entraînement de détection de visage selon la revendication 1, dans lequel le réseau neuronal convolutif a une couche de réseau sous-jacente, une couche de prédiction de proposition et une couche de détection de visage, dans lequel la couche de prédiction de proposition comprend une couche de réseau de proposition de région, RPN, adaptée à générer des zones de délimitation candidates, dans lequel le procédé comprend :

la prédéfinition d'une pluralité de zones d'ancrage, la pluralité de zones d'ancrage ayant des tailles et des rapports d'aspect différents ; et
la détermination d'une sous-zone dans l'échantillon d'entraînement en utilisant la pluralité de zones d'ancrage prédéfinies, et la prédiction d'une proposition en utilisant la sous-zone.

12. Appareil d'entraînement de détection de visage, comprenant une mémoire et un processeur,
la mémoire stockant un programme qui, lorsqu'il est exécuté par le processeur, amène le processeur à réaliser le procédé selon l'une quelconque des revendications 1 à 11.

13. Support de stockage lisible par ordinateur comprenant des instructions qui, lorsqu'elles sont exécutées sur un ordinateur, amènent l'ordinateur à réaliser le procédé selon l'une quelconque des revendications 1 à 11.

FIG. 1

FIG. 2

FIG. 3

Start

Obtain a training sample set of a current
iteration, the training sample set including a
plurality of training samples, and sample classes
of the plurality of training samples including a
positive class and a negative class

S100

Determine, according to an eigenvector of each of
plurality of training samples and a center eigenvector
for a sample class to which each of plurality of
training samples belongs, a center loss value
corresponding to each of plurality of training samples

S110

Determine, according to the center loss value
corresponding to each of plurality of training samples
, a center loss value corresponding to the training
sample set

S120

Determine a target loss value of face detection
according to the center loss value corresponding to
the training sample set and a classification loss
value corresponding to the training sample set

S130

Determine whether
the target loss value satisfies a specified training
convergence condition

S140

No

Yes

Update network parameters
related to the face detection and
that are of a face detection model
according to the target loss value
of the face detection, and enter a
next iteration

S150

S160

Output a face detection
training result

FIG. 4

FIG. 5

| | S200 |
|---|---|
| Determine, according to a proposal, predicted face box coordinates corresponding to each of the plurality of training samples in the batch data training sample | |

| | S210 |
|---|---|
| Determine a face box coordinate regression loss value corresponding to each of the plurality of training samples according to the predicted face box coordinates and target face box coordinates corresponding to each of the plurality of training samples | |

| | S220 |
|---|---|
| Determine a face box coordinate regression loss value corresponding to the batch data training sample according to the face box coordinate regression loss value corresponding to each of the plurality of training samples | |

FIG. 6

S300

Fix a face detection module in a previous iteration, and obtain a center loss value, a classification loss value, and a face box coordinate regression loss value corresponding to each of the plurality of training samples in a training sample set by using the face detection module in the previous iteration

S310

Determine a target loss value of each training sample in the training sample set according to the center loss value, the classification loss value, and the face box coordinate regression loss value corresponding to each of the plurality of training samples in the training sample set

S320

Select, according to a target loss value of each of the plurality of training samples of a positive sample class in the training sample set, a first number of training samples that are of the positive sample class and have a maximum target loss value, and select, according to a target loss value of each of the plurality of training samples of a negative sample class in the training sample set, a second number of training samples that are of the negative sample class and have a maximum target loss value

S330

Form the batch data training sample in the current iteration according to the training samples selected from the positive sample class and the training samples selected from the negative sample class

FIG. 7

100

Sample obtaining module

200

Sample center-loss-value determining module

300

Batch-sample center-loss-value determining module

400

Detection target-loss-value determining module

500

Parameter update module

600

Detection output module

FIG. 8

Batch-sample
classification-loss-
value determining
module

700

100

200

300

400

Sample
obtaining
module

Sample center-
loss-value
determining
module

Batch-sample
center-loss-value
determining
module

Detection target-
loss-value
determining module

500

Parameter
update
module

Detection
output module

600

FIG. 9

800

Batch-sample face-
box-coordinate
regression-loss-
value determining
module

Batch-sample
classification-loss-
value determining
module

700

100

200

300

400

Sample
obtaining
module

Sample center-
loss-value
determining
module

Batch-sample
center-loss-value
determining
module

Detection target-
loss-value
determining
module

500

Parameter
update module

Detection
output module

600

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JIMIN XIAO**. *IAN: The Individual Aggregation Network for Person Search*
- **WEN YANDONG**. *A Discriminative Feature Learning Approach for Deep Face Recognition*
- **XIAO ZHANG**. *Range Loss for Deep Face Recognition with Long-tail*